# DEMANDE DE BREVET EUROPEEN

(11) **EP 0 786 571 A1**
(43) Date de publication de la demande: **30.07.1997**
(21) Numéro de dépôt: 97440009.5
(22) Date de dépôt: 24.01.1997
(51) Int. Cl.: E04H 15/32, B60J 7/06, E04B 7/16

(54) **Dispositif de mise sous tension d'une couverture souple étendue au-dessus d'une structure**

(30) Priorité: 24.01.1996 FR 9601030; 25.01.1996 FR 9601033
(71) Demandeur: Etablissements Lucien WALTER Société Anonyme dite,, F-67170 Brumath (FR)
(72) Inventeur: Walter, Denis, 67370 Schnersheim (FR)
(74) Mandataire: Rhein, Alain

(57) **Abrégé**

L'invention a trait à un dispositif de mise sous tension d'une couverture souple (3) étendue au-dessus d'une structure (4) se présentant, essentiellement, sous forme d'un cadre (5) auquel est rendue solidaire, en périphérie, ladite couverture (3).

Ce dispositif est caractérisé en ce qu'il est constitué par un arceau déformable (17) s'étendant entre deux côtés de ladite structure (4), cet arceau déformable (17) comportant un profilé (18) qui, lors de la mise sous contrainte de moyens de traction (19) agissant sur ses parties d'extrémité (20,21), peut emprunter une forme d'arc en vue d'exercer, sous ladite couverture (3), une poussée sensiblement perpendiculaire au plan défini par la structure (4) et qui, contrairement et en relâchant la contrainte appliquée sur lesdits moyens de traction (19), vient se redresser pour emprunter une forme moins arquée, voire rectiligne pour relâcher l'action exercée sous cette couverture (3).

L'invention concerne tant le domaine des constructions du type abri, chapiteau, tente ou analogue, que celui des véhicules de transport.

## Description

L'invention a trait à un dispositif de mise sous tension d'une couverture souple étendue au-dessus d'une structure se présentant, essentiellement, sous forme d'un cadre auquel est rendue solidaire, en périphérie, ladite couverture.

La présente invention trouvera son application tant dans le domaine des structures du type chapiteau, tente, abri ou analogue, que celui des véhicules de transport dont une paroi, tout particulièrement la toiture, est recouverte au moyen d'une couverture en matériau souple, notamment en matériau composite, tel qu'une toile polyester à enduction PVC ou analogue.

Si l'on prend le cas tout particulier des constructions du type abri, chapiteau, tente ou analogue, on constate que celles-ci comportent, le plus fréquemment, une structure constituée par un assemblage de profilés ou poutres. En fait, ces structures sont définies par une succession de portiques comprenant des poteaux sur lesquels repose une ferme à deux pentes ou du type polygonale. Les différents portiques sont, en outre, rendus solidaires les uns des autres au moyen de longerons.

La toiture est formée par des couvertures souples s'étendant au-dessus des fermes, plus particulièrement, entre deux portiques successifs. Ainsi, il est fréquent de munir les bords transversaux d'une couverture de joncs qui sont engagés dans des gorges prévues, à cet effet, au niveau des profilés constituant ladite ferme. Une telle couverture est ensuite tendue, au niveau de ses bords longitudinaux, avec des barres de tension reliant, de part et d'autre de la structure, les poteaux des deux portiques précités. L'on remarquera, en outre, que d'une manière habituelle, il est nécessaire d'étendre entre les fermes correspondant à ces portiques des pannes de liaison venant, à la fois, rigidifier la structure et soutenir, à distance régulière, la couverture.

Il apparaît évident que, dans de telles conditions, la couverture ne peut être tendue sur toute sa surface ce qui pose le problème de la répartition des contraintes sur la structure lorsque ladite couverture est amenée à supporter, localement, une charge, par exemple, de la neige ou de la glace. En outre, on ne peut empêcher une telle couverture de flotter au vent.

A propos de ces pannes de liaison, l'on observera que leur pose au niveau de la structure ne peut être effectuée qu'une fois les portiques relevés de sorte qu'il faut intervenir en hauteur ce qui représente un risque pour les monteurs.

Parallèlement, l'on connaît l'usage de couvertures dites à double courbure qui sont conçues de sorte qu'une fois tendue entre deux portiques successifs, elles empruntent une forme concave dans des directions perpendiculaires. Finalement, une telle couverture, lorsqu'elle est amenée à supporter une charge, même localisée, garantit, en raison de sa tension bidirectionnelle, une parfaite répartition des contraintes au niveau de la structure. Cette tension bidirectionnelle due à sa configuration à double courbure permet, également, d'éviter son flottement au vent.

En fait, l'inconvénient majeur de telles couvertures réside au niveau de leur pose et dépose au-dessus d'une structure. Ainsi, si l'on envisage une solution similaire à celle exposée précédemment et consistant à équiper des bords transversaux de la couverture de joncs destinés à être insérés dans les profilés à gorge de deux portiques successifs, il est indispensable, au moment de hâler cette couverture au-dessus desdits portiques, de rapprocher, sensiblement, ces derniers, sans quoi, précisément, ce halage est impossible à effectuer.

Par conséquent, l'emploi de telles couvertures à double courbure remet en cause la méthode de montage de la structure tout en la rendant bien plus délicate. En outre, il est totalement impossible d'envisager la conception d'une construction équipée d'une toiture sous forme d'une couverture à double courbure que l'on puisse ouvrir et découvrir à volonté de manière automatisée.

En effet, la configuration en double courbure ne permet pas d'enrouler une telle couverture sur un tambour. Elle est donc plus particulièrement adaptée à des structures non découvrables.

Finalement, l'on observera que l'usage d'une couverture plane, nécessite la conception d'une toiture dont la forme est adaptée pour permettre l'évacuation de l'eau de pluie retombant sur la couverture, d'où l'utilité de fermes à deux pentes ou de forme polygonale. Or, de telles fermes, respectant entre elles une distance maximale limitée du fait d'une couverture non parfaitement tendue, restent forcement en position et donc apparentes une fois la structure découverte. Ces fermes ainsi que leurs contreventements confèrent, ainsi, à l'ensemble un aspect squelettique, peu esthétique.

Parallèlement à ce problème des constructions du type abri chapiteau, tente ou analogue, se posent, en outre, les difficultés de recouvrir une structure correspondant à un véhicule de transport par exemple d'un semi-remorque ou d'un wagon ferroviaire. Dans ce cas l'on dispose d'un plateau de chargement surmonté d'une structure comprenant deux longerons reliés, à leurs extrémités, au moyen de traverses. Cette structure reposant, au moins à ses quatre coins, sur des poteaux montés sur le plateau de chargement. Ces véhicules de transport peuvent être munis, latéralement, de ridelles montées pivotantes sur les bords longitudinaux dudit plateau de chargement.

En fait, il est usuel de fermer ce type de véhicules de transport au moyen d'une couverture souple formant tant les parois latérales que la toiture. A propos d'une telle couverture formant toiture, celle-ci est tendue, en périphérie, soit au moyen de sangles ou de sandows. Certaines normes de transport du type « T.I.R. », exigent qu'il ne soit pas possible d'introduire ne serait-ce qu'une main à l'intérieur du véhicule de transport sans compter que l'on doit pouvoir s'assurer qu'à aucun moment le véhicule ne fut ouvert en cours de trajet. Cela explique que les bords périphériques de la couverture souple sont souvent équipés d'oeillets respectant, entre eux, une distance maximum et qui sont destinés à venir se positionner sur des passants solidaires, directement ou indirectement, de la structure, c'est-à-dire des longerons et des traverses précédemment cités. Dans ces passants est ensuite enfilé un câble maintenu en position par des moyens de verrouillage appropriés. se pose, dans ces conditions, le problème du bâchage et du débâchage de tels véhicules, opérations qui s'avèrent, nécessairement longues et contraignantes.

A noter, à ce propos, que la solution des sangles ou des sandows évoquée plus haut ne facilite pas la tâche à l'opérateur, puisqu'il leur faut, là encore, attacher, régulièrement, ces sangles ou sandows à la structure du véhicule, tenant compte, en outre, que cela nécessite une intervention en hauteur et que ces opérateurs sont, donc, dans l'obligation de grimper sur le véhicule avec tous les dangers que cela représente.

En fait, il est tout particulièrement remarqué que malgré ces efforts à fournir pour le bâchage et le débâchage d'un véhicule de transport, le problème de la mise sous tension de la couverture formant toiture n'est pas résolu. Aussi, cette couverture flotte-t-elle systématiquement au vent ce qui est à l'origine de son usure prématurée.

Finalement, la présente invention a pour but d'apporter une solution avantageuse à l'ensemble des inconvénients précités ceci au travers d'un dispositif de mise sous tension d'une couverture souple ayant tout particulièrement la faculté de conférer à cette couverture souple une forme en double courbure d'où résulte un certain nombre d'avantages auxquels il a d'ores et déjà été fait référence.

A cet effet, l'invention concerne un dispositif de mise sous tension d'une couverture souple étendue au-dessus d'une structure se présentant, essentiellement, sous forme d'un cadre auquel est rendue solidaire, en périphérie, ladite couverture, caractérisé par le fait qu'il est constitué par un arceau déformable s'étendant entre deux côtés de ladite structure, cet arceau déformable comportant un profilé qui, lors de la mise sous contrainte de moyens de traction agissant sur ses parties d'extrémité, peut emprunter une forme d'arcs en vue d'exercer, sous ladite couverture, une poussée sensiblement perpendiculaire au plan défini par la structure et qui, contrairement et en relâchant la contrainte appliquée sur lesdits moyens de traction, vient se redresser pour emprunter une forme moins arquée, voire rectiligne pour relâcher l'action exercée sous cette couverture.

Selon une autre particularité de l'invention, cet arceau déformable est monté coulissant sur deux côtés opposés parallèles de ladite structure permettant de le repousser à l'une ou l'autre des extrémités de cette dernière.

Ainsi, quelle que soit la tension conférée à la couverture par l'intermédiaire des moyens assurant sa liaison au cadre définissant la structure, il est possible d'obtenir une parfaite mise sous tension de cette couverture par l'intermédiaire des arceaux déformables conformes à l'invention.

En fait, l'on observera, en outre, qu'au travers de cette mise sous tension à l'aide des moyens conformes à l'invention, la couverture initialement plane peut emprunter une forme en double courbure évitant, non seulement son flottement au vent mais, en outre, favorisant l'écoulement de l'eau de pluie.

De plus, de tels arceaux déformables étant de nature escamotables, ils permettent de découvrir, totalement, une structure ce qui a l'avantage de rendre celle-ci plus esthétique dans le cas particulier d'un abri découvrable. Appliqué à un véhicule de transport, cela permet de dégager, totalement, la surface délimitée par les longerons et les traverses définissant la structure en vue de faciliter, le chargement, par le dessus, dudit véhicule de transport.

D'autres buts et avantages de la présente invention apparaîtront au cours de la description qui va suivre, se rapportant à un mode de réalisation.

La compréhension de cette description sera facilitée en se référant aux dessins joints en annexe et dans lesquels :
- la figure 1 est une vue schématisée et en perspective d'un véhicule de transport dont la toiture est constituée par une couverture en matériau souple susceptible d'être mise sous tension au moyen d'un dispositif conforme à l'invention ;
- la figure 2 est une vue schématisée et en élévation d'un arceau déformable conforme à l'invention, ceci dans une configuration non arquée ;
- la figure 3 est une vue similaire à la figure 2, l'arceau étant, dans ce cas, mis sous contrainte pour être cintré ;
- la figure 4 est une vue de détail de la figure 2 ;
- la figure 5 est une représentation schématisée et en perspective d'un abri découvrable muni de dispositifs de mise sous tension de la couverture formant toiture.

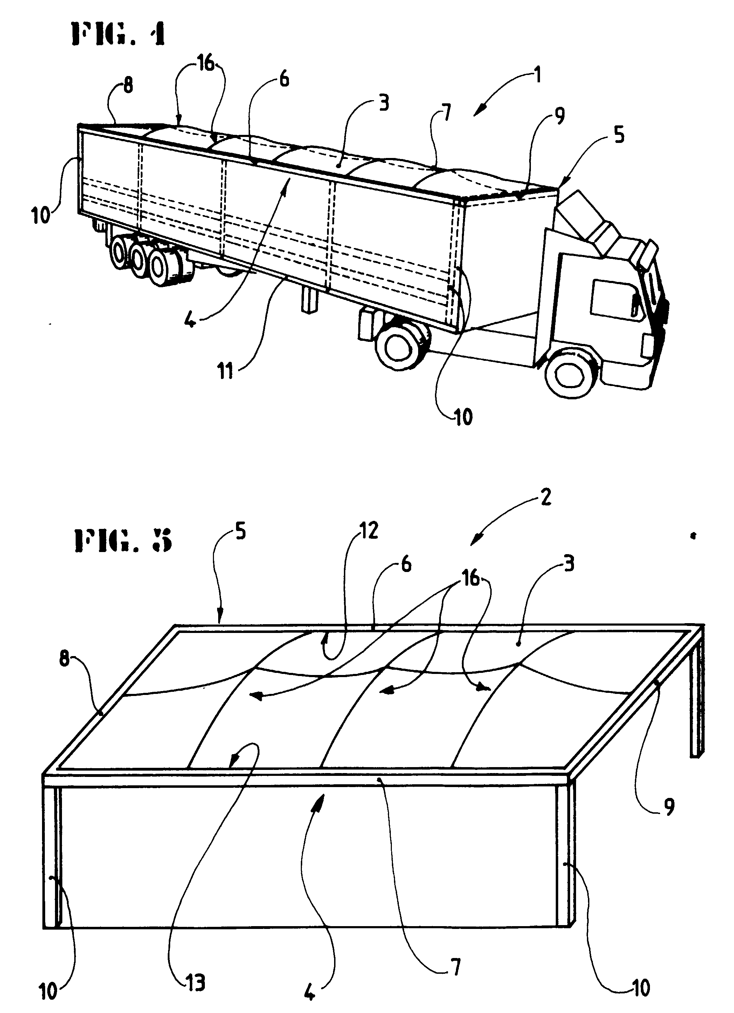

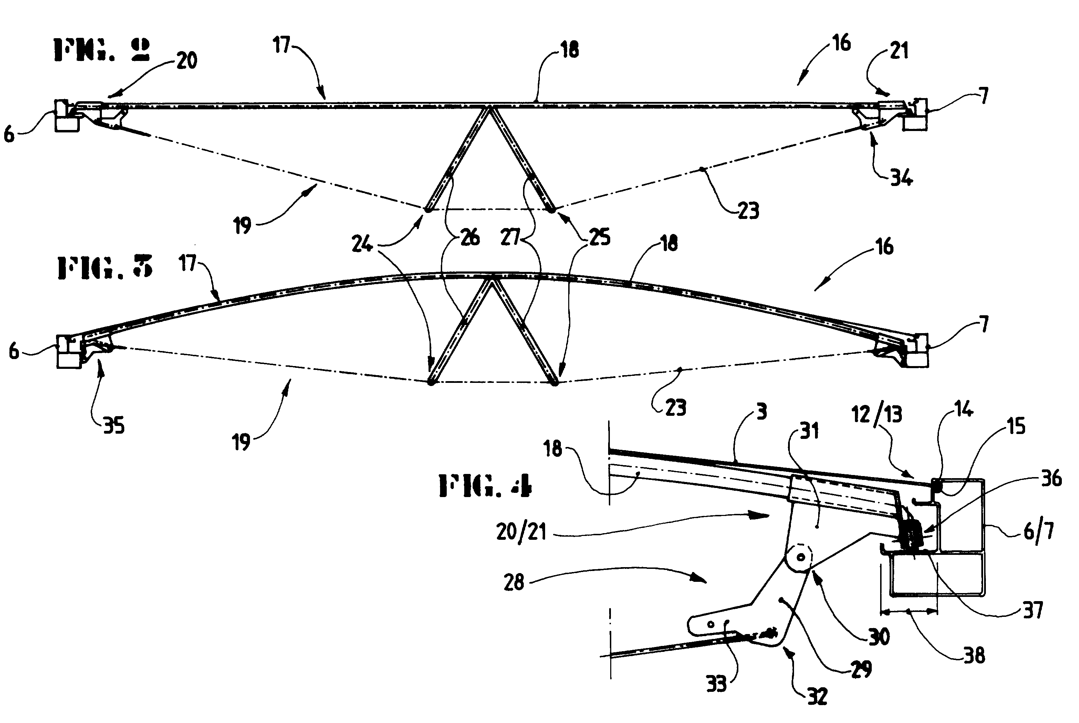

Tel que représenté dans les figures 1 et 5, la présente invention concerne tant les véhicules de transport 1 du type semi-remorque et wagons de transport ferroviaire, que les constructions 2 du type abris, chapiteaux, tentes ou analogues. En fait, l'invention s'attache, d'une manière générale, au problème de la mise sous tension d'une couverture souple 3 étendue au-dessus d'une structure 4 se présentant, essentiellement, sous forme d'un cadre 5 auquel est rendue solidaire, en périphérie, ladite couverture 3.

Ainsi, dans le cadre des modes de réalisation correspondant aux figures 1 et 5, ladite structure 4 comporte deux longerons parallèles 6, 7 reliés à leurs extrémités au moyen de traverses 8, 9. Le cadre 5 ainsi défini repose, au moins à chaque coin, sur des poteaux 10, selon le cas, rapportés sur le plateau de chargement 11 du véhicule de transport 1, ou fixés au sol s'agissant d'un abri 2 tel que représenté dans la figure 5.

L'on peut, bien entendu imaginer d'autres poteaux répartis entre ceux précédemment cités et venant soutenir le cadre 5 correspondant à la structure 4.

Il convient encore d'observer que la présente invention n'est nullement limitée à un type de moyens de fixation, en périphérie, de la couverture 3 sur la structure 4. Ainsi, l'on peut imaginer équiper cette couverture 8 de sangles ou de sandows répartis, régulièrement, sur sa bordure périphérique qui est destinée à coopérer avec des moyens d'attache de forme conjuguée ménagée sur les longerons 6, 7 et les traverses 8, 9 de la structure 4. En outre, tout comme rappelé dans la partie introductive, cette couverture 8 peut être munie, également répartis sur sa périphérie, d'oeillets venant se positionner sur des passants équipant la structure 4, dans ces passants étant, ensuite, enfilé un câble ou analogue.

Une autre solution avantageuse dans la mesure où elle facilite considérablement, le bâchage et le débâchage, soit du véhicule de transport 1, soit de la construction 2, consiste à équiper, par exemple, les bords longitudinaux de la couverture 3 d'un jonc 14 tel que visible dans la figure 4, ce jonc 14 étant destiné à être enfilé dans une gorge 15 prévue à cet effet au niveau des longerons 6, 7.

Ainsi, l'on peut aisément envisager d'enrouler ou de replier cette couverture 3 à l'une des extrémités de la structure 4 tandis que pour l'étendre, à nouveau, au-dessus de cette dernière, il suffit d'exercer une traction sur son extrémité libre de manière à provoquer, l'engagement complet des joncs 14 dans les gorges 15. Des moyens de fixation quelconques pourront, ensuite, rendre solidaire cette couverture 3 à ses extrémités transversales, des traverses 8, 9.

Il paraît essentiel de porter l'attention sur le fait qu'une disposition transversale plutôt que longitudinale est envisageable dans le cadre de la conception précédemment décrite. Ainsi, l'on peut imaginer d'équiper les bords transversaux de la couverture 3 de joncs destinés à coopérer avec des gorges ménagées, dans ce cas, au niveau des traverses de la structure 4.

En outre, si cette dernière est décrite et représentée de forme parallélépipédique, la présente invention n'est nullement limitée à une telle forme.

En effet, l'invention concerne un dispositif de mise sous tension 16 de ladite couverture 3, qui tel que visible dans les figures 2 à 4, se présente sous forme d'un arceau déformable 17 s'étendant entre deux côtés de la structure 4.

Ainsi, cet arceau déformable 17 comporte un profilé 18 qui, sous la contrainte de moyens de traction 19 agissant sur ses parties d'extrémité 20, 21, vient se cintrer en vue d'exercer, sous ladite couverture 3, une poussée verticale ascendante sensiblement perpendiculaire au plan du cadre 5 défini par cette structure 4. Contrairement, en relâchant la contrainte appliquée sur lesdits moyens de traction 19, ce profilé 18 est à même de se redresser pour emprunter une forme moins cintrée, préférentiellement rectiligne, dans le but de détendre ladite couverture 3 en venant relâcher l'action exercée sur cette dernière.

Selon un mode de réalisation préférentiel, les moyens de traction 19 se présentent sous forme d'au moins un câble 23 rejoignant les parties d'extrémité 20, 21 du profilé 18 en passant par le sommet 24, 25 d'au moins un buton 26, 27 s'étendant sous ledit profilé 18. Ainsi, tel que représenté dans la figure 2, l'on peut disposer deux butons 26, 27 formant une structure en « V » renversé qui, en partie supérieure, est rendue solidaire de la partie médiane dudit profilé 18. L'on peut encore imaginer toute une série de butons s'étendant verticalement sous toute la longueur du profilé 18, ces butons étant progressivement plus courts en partant de la partie médiane du profilé 18 jusqu'aux parties d'extrémité 20, 21 de ce dernier.

Les moyens de traction 19 sont encore complétés par des moyens de mise sous tension 28 du câble 23 ayant, en définitive pour fonction de moduler la longueur de ce dernier par rapport à celle figée du profilé 18. Plus précisément, en exerçant une traction sur ce câble 23 empruntant, initialement, une trajectoire courbe en passant par le sommet 24, 25 des butons 26, 27, il aura tendance à se rapprocher d'une trajectoire rectiligne telle que représentée dans la figure 3. Contrairement le profilé 18 viendra se cintrer sous cette tension appliquée à ses parties d'extrémité 20, 21.

Dans le cas représenté dans les figures 2 à 4, correspondant à un exemple de réalisation lesdits moyens de mise sous tension 28 du câble 23 se situent aux extrémités de ce dernier donc à hauteur des parties d'extrémités 20, 21 du profilé 18. L'on remarquera, cependant, que l'on peut imaginer n'équiper qu'une seule des extrémités du câble 23 de tels moyens de mise sous tension 28.

Selon un mode de réalisation préférentiel, ces moyens de mise sous tension 28, se présentent sous forme de cames 29 montées basculantes, à l'une 30 de ses extrémités, sur une chape 31 solidaire des parties d'extrémités 20, 21 du profilé 18, tandis qu'à l'extrémité opposée 32 de cette came 29, est fixé le câble 23.

Ladite came 29 est par ailleurs prolongée par un bras de levier 33 permettant de lui conférer deux positions d'équilibre stable dont l'une 34 correspondant au cas où le câble 23 est relâché et dont l'autre 35 est celle occupée par cette came 29 lorsque le câble 23 est mis sous tension et que le profilé 18 est arqué.

Il est bien évident qu'une construction 2, telle que représentée dans la figure 5, ou encore un véhicule 1, correspondant à la figure 1, peut être équipée de plusieurs dispositifs 16, conformes à l'invention et, donc, de plusieurs profilés 18 que l'on vient arquer sous la commande des cames 29. A ce propos, l'usager peut intervenir, individuellement, sur le bras de levier 33 de chacune de ces cames 29 correspondant à différents arceaux déformables 17. L'on peut toutefois envisager une liaison mécanique reliant ces bras de levier 33 des différentes cames 29 de manière à autoriser, sous une même commande, la déformation simultanée de plusieurs profilés 18 correspondant à des arceaux déformables 17, pour finalement, mettre sous tension la couverture 3 sur toute sa surface.

De manière, par exemple, à faciliter le chargement d'un véhicule de transport 1 correspondant à la figure 1 ou encore en vue de dégager, totalement, la toiture d'une construction 2 telle que représentée dans la figure 5, un arceau déformable 17 peut être de nature escamotable, tout particulièrement lorsqu'il s'étend entre deux côtés parallèles de la structure 4. Ainsi, dans ce but, les profilés 18 comportent, avantageusement, dans leurs parties d'extrémité 20, 21, des moyens de roulement ou de coulissement 36 reposant sur un chemin de roulement ou de coulissement 37 ménagé au niveau de ses côtés parallèles, en l'occurrence au niveau des longerons 6, 7 correspondant à la structure 4 et sur lesquels repose l'arceau déformable 17.

On notera que ce chemin de roulement ou de coulissement 37 comporte une largeur 38 déterminée en fonction des variations de la longueur d'un arceau déformable 17 selon que son profilé 18 est ou non cintré.

Tel que déjà évoqué dans la partie introductive de la description, la présente invention permet de remédier à l'ensemble des inconvénients rencontrés dans le domaine visé, à savoir assurer une parfaite mise sous tension d'une couverture, normalement plane, de manière à éviter son flottement au vent tout en améliorant la tenue mécanique d'une telle couverture et plus particulièrement de la structure sous l'influence d'une charge, telle que de la neige.

En outre, comme cela apparaît dans la description de détail ci-dessus, le dispositif de mise sous tension d'une couverture permet finalement de faire appel à des solutions particulièrement avantageuses pour relier la couverture à la structure, dans la mesure ou elles facilitent considérablement le déploiement et le repliement de cette couverture, ceci comparativement aux solutions plus habituelles mises en oeuvre, par exemple, sur les véhicules de transport. En effet, ces moyens de liaison avaient, jusqu'alors pour obligation d'assurer simultanément, une mise sous tension au moins partielle de la couverture. En fait, ils en sont, à présent, dispensés.

Par conséquent, la présente invention apporte un net progrès dans le domaine technique considéré.

## Revendications

1. Dispositif de mise sous tension d'une couverture souple (3) étendue au-dessus d'une structure (4) se présentant, essentiellement, sous forme d'un cadre (5) auquel est rendue solidaire, en périphérie, ladite couverture (3), caractérisé par le fait qu'il est constitué par un arceau déformable (17) s'étendant entre deux côtés de ladite structure (4), cet arceau déformable (17) comportant un profilé (18) qui, lors de la mise sous contrainte de moyens de traction (19) agissant sur ses parties d'extrémité (20, 21), peut emprunter une forme d'arc en vue d'exercer, sous ladite couverture (3), une poussée sensiblement perpendiculaire au plan défini par la structure (4) et qui, contrairement et en relâchant la contrainte appliquée sur lesdits moyens de traction (19) , vient se redresser pour emprunter une forme moins arquée, voire rectiligne pour relâcher l'action exercée sous ladite couverture (3) .

2. Dispositif de mise sous tension selon la revendication 1, caractérisé par le fait que les moyens de traction (19) se présentent sous forme d'au moins un câble (23) rejoignant les parties d'extrémité (20, 21) du profilé (18) en passant par le sommet (24, 25) d'au moins un buton (26, 27) s'étendant sous ledit profilé (18).

3. Dispositif de mise sous tension selon la revendication 2, caractérisé par le fait qu'il comporte deux butons (26, 27) formant une structure en « V » renversé qui, en partie supérieure, est rendue solidaire de la partie médiane dudit profilé (18), tandis que le câble (23) passe par le sommet (24, 25) de ces butons (26, 27).

4. Dispositif de mise sous tension selon la revendication 2, caractérisé par le fait qu'il comporte une série de butons s'étendant verticalement sous toute la longueur du profilé (18), ces butons étant progressivement plus courts en partant de la partie médiane du profilé (18) jusqu'aux parties d'extrémité (20, 21) de ce dernier.

5. Dispositif de mise sous tension selon l'une quelconque des revendications précédentes, caractérisé par le fait que les moyens de traction (19) sont complétés par des moyens de mise sous tension (28) du câble (23) ayant pour fonction de moduler la longueur de ce dernier par rapport à celle figée du profilé (18).

6. Dispositif de mise sous tension selon la revendication 5, caractérisé par le fait que les moyens de mise sous tension (28) du câble (23), d'une part, se situent au moins à l'une des extrémités de ce dernier et, donc, à hauteur d'au moins l'une des parties d'extrémité (20, 21) du profilé (18) et, d'autre part, se présentent sous forme d'une came (29) montée basculante, à l'une (30) de ses extrémités, sur une chape (31) solidaire d'une partie d'extrémité (20, 21) du profilé (18), tandis qu'à l'extrémité opposée (32) de cette came (29) est fixé le câble (23).

7. Dispositif de mise sous tension selon la revendication 6, caractérisé par le fait que la came (29) est prolongée par un bras de levier (33) permettant de lui conférer deux positions d'équilibre stables dont l'une (34) correspond au cas où le câble (23) est relâché et dont l'autre (35) est celle occupée par cette came (29) lorsque le câble (23) est mis sous tension et que le profilé (18) est arqué.

8. Dispositif de mise sous tension selon l'une quelconque des revendications précédentes, caractérisé par le fait que l'arceau déformable (17) qui le constitue est monté coulissant sur deux côtés opposés parallèles de ladite structure (4) permettant de le repousser à l'une ou l'autre des extrémités de cette dernière.

9. Dispositif de mise sous tension selon la revendication 8, caractérisé par le fait que le profilé (18) comporte, à ses parties d'extrémité (20, 21), des moyens de roulement ou de coulissement (36) reposant sur un chemin de roulement ou de coulissement (37) ménagé au niveau des côtés parallèles de la structure (4) sur lesquels repose l'arceau déformable (17).

10. Dispositif de mise sous tension selon la revendication 9, caractérisé par le fait que le chemin de roulement ou de coulissement (37) comporte une largeur (38) déterminée en fonction des variations de la longueur d'un arceau déformable (17) selon que son profilé (18) est ou non cintré.
